# EUROPEAN PATENT SPECIFICATION

(11) **EP 4 380 995 B1**
(45) Date of publication and mention of the grant of the patent: **02.07.2025**
(21) Application number: 22896832.7
(22) Date of filing: 02.08.2022
(51) Int. Cl.: C08G 63/183, C08G 63/199, C08K 5/00

(54) **FLAME RETARDANT COPOLYESTER COMPOSITIONS**
FLAMMHEMMENDE COPOLYESTERZUSAMMENSETZUNGEN
COMPOSITIONS DE COPOLYESTER IGNIFUGES

(30) Priority: 03.08.2021 US 202163203871 P
(43) Date of publication of application: 12.06.2024
(73) Proprietor: Eastman Chemical Company, Kingsport, TN 37660 (US)
(72) Inventor: WILLIAMSON, Brandon Robert, Clemson, SC 29631 (US); ATKINSON, Paul Michael, Kingsport, TN 37664 (US)
(74) Representative: Wallinger Ricker Schlotter Tostmann
(86) International application number: PCT/US2022/039101
(87) International publication number: WO 2023/121721

(56) References cited:
- US-A1- 2012 184 641
- US-A1- 2013 303 692

## Description

### FIELD OF THE INVENTION

The present invention relates to the use of a combination of certain additives in a copolyester to improve the flame retardant properties of the copolyester composition and to also have high impact properties. More specifically, the present invention relates to the use of a halogenated flame retardant in copolyesters to improve the flame retardant properties while retaining impact and glass transition temperature.

### BACKGROUND OF THE INVENTION

Flame retardant materials are added to some polymers to improve flame resistance, particularly to meet specific fire standards such as UL94 V-2. However, the addition of flame retardant materials in amounts sufficient to meet the fire standards may have a deleterious effect on impact resistance and glass transition temperature of the copolyester containing an effective amount of the flame retardant materials. Further the addition of many flame retardant materials will not be able to meet fire standards of UL94 V-O or better regardless of the amount utilized, let alone maintaining the necessary physical properties of the polymer composition.

Copolyesters can be flame retarded in a variety of means but these methods have some drawbacks. Certain halogen compounds such as Dechlorane Plus^{®} (OxyChem^{®}), decabromodiphenyl oxide or decabromodiphenyl ether can be effective flame retardants, but may be objectionable in the marketplace due to potential concerns of bio-accumulation. Other halogen compounds may not have the same objections, but may cause embrittlement when used at sufficient quantities to flame retard copolyesters. Liquid phosphorous compounds such as triphenyl phosphite or triphenyl phosphate can flame retard copolyesters but at effective use levels, they plasticize and soften the copolyester thus reducing heat resistance to distortion. Solid flame retardants in the melamine and phosphorous classes can be used individually as well, but in the past, the concentrations needed to achieve flame retardancy have made the copolyester brittle or reduced tensile strength properties. Plastics used in many applications such as lighting diffusers, light emitting diode (LED) light fixtures, electronics applications, wall protection products and housings for handheld and stationary appliances all have flammability requirements specified in various codes or standards. These applications also have durability or physical property requirements in addition to flammability requirements. US 2013/303692 A1 relates to polyester compositions made from terephthalic acid or an ester thereof or mixtures thereof; 2,2,4,4-tetramethyl-1,3-cyclobutanediol; and cyclohexanedimethanol, the polyester having a certain combination of inherent viscosity and glass transition temperature. These compositions have a certain combination of at least two of high impact strengths, moderate glass transition temperature (Tg), toughness, certain inherent viscosities, low ductile-to-brittle transition temperatures, good color and clarity, low densities, chemical resistance, and long crystallization half-times, which allow them to be easily formed into articles.

There exists a need for improved copolyester compositions comprising effective flame retardants which exhibit good flame resistance, good clarity and impact resistance.

### BRIEF SUMMARY OF THE INVENTION

Applicants have unexpectedly discovered an improved copolyester composition comprising an effective amount of certain brominated flame retardants useful for making articles such as films, sheets, molded parts, or profiles which exhibit good flame resistance and good clarity while maintaining glass transition temperature and impact resistance.

In one aspect, a copolyester composition is provided that comprises:
(a) from about 50 to about 95 weight % of a copolyester, the copolyester comprising:
   (i) a diacid component comprising
      from 70 to 100 mole % residues of terephthalic acid,
      from 0 to 30 mole % residues of a modifying aromatic diacid having from 8 to 12 carbon atoms, and
      from 0 to 10 mole % residues of an aliphatic dicarboxylic acid; and
   (ii) a glycol component comprising
      from 45 to 95 mole % cyclohexanedimethanol (CHDM) residues
      from 5 to 65 mole % 2,2,4,4-tetramethylcyclobutane-1,3-diol (TMCD) residues, and
      from 0 to 10 mole% of a modifying glycol having 2 to 20 carbon atoms;

   wherein the inherent viscosity of the copolyester is from 0.5 to 1.2 dL/g as determined in 60/40 (wt/wt) phenol/tetrachloroethane at a concentration of 0.5 g/100 ml at 25°C,
   wherein the weight % is based on the weight of the copolyester, and
   wherein the total mole % of the dicarboxylic acid component is 100 mole % and the total mole % of the glycol component is 100 mole %;
(b) from about 5 to about 30 weight % of a flame retardant additive comprising a halogen-containing compound and having a melting point (Tₘ) or a glass transition temperature (Tg) of 270ºC or lower;
   wherein the copolyester composition has a UL 94 V-0 rating or better; and
   wherein the copolyester composition has a notched Izod impact strength or 150 Joules/m or greater, measured according to ASTM D256.

In embodiments, the copolyester composition further comprises: (c) from about 1 to about 10 wt% of a flame retardant synergist additive. In certain embodiments, the flame retardant synergist additive comprises antimony. In certain embodiments, the flame retardant synergist additive comprises an antimony compound chosen from antimony trioxide, sodium antimonate, antimony pentoxide, or combinations thereof.

In embodiments, the glycol component comprises from 60 to 95 mole % cyclohexanedimethanol residues and from 5 to 40 mole % of 2,2,4,4-tetramethylcyclobutane-1,3-diol residues. In certain embodiments, the glycol component comprises from 70 to 95 mole % cyclohexanedimethanol residues and from 5 to 30, or 10 to 30, or 15 to 30, or 20 to 30, or 15 to 25 mole % of 2,2,4,4-tetramethylcyclobutane-1,3-diol residues. In certain embodiments, the glycol component comprises from 60 to 75 mole % cyclohexanedimethanol residues and from 25 to 40, or 30 to 40 mole % of 2,2,4,4-tetramethylcyclobutane-1,3-diol residues.

In embodiments, the inherent viscosity of the copolyester is from 0.55 to 0.85, or 0.55 to 0.65, or 0.65 to 0.80, or 0.65 to 0.75 dL/g.

In embodiments, the flame retardant additive is present in an amount from 6 to 26 wt%, or 10 to 25 wt%, or 11 to 21 wt% of the copolyester composition.

In embodiments, the flame retardant additive comprises a bromine containing compound. In certain embodiments, the flame retardant additive has a bromine content from 5 to 15 wt%. In certain embodiments, the bromine containing compound is an aliphatic compound. In other embodiments, the bromine containing compound is an aromatic compound. In one embodiment, the bromine containing compound is 2,4,6-tris(2,4,6-tribromophenoxy)-1,3,5 triazine.

In embodiments, the flame retardant additive has a Tm or Tg of 250C or less.

In embodiments, the copolyester composition further comprises a drip suppressant or an impact modifier or mixtures thereof. In embodiments, the copolyester composition comprises an impact modifier chosen from a reactive acrylic impact modifier, an unreactive MBS impact modifier, an epoxide-functionalized impact modifier, or mixtures thereof. In embodiments, the copolyester composition further comprises a chain extender. In certain embodiments, the chain extender comprises a multifunctional epoxide chain extender.

In embodiments, the copolyester composition has a notched Izod impact strength of 150, or 200, or 250, or 300, or 500 Joules/m or greater measured according to ASTM D256. In one embodiment, the copolyester composition exhibits 100% ductile behavior when tested according to ASTM D256.

In another aspect, an article is provided that comprises a copolyester composition according to one or more of the embodiments, or a combination of any of the embodiments, described herein. In embodiments, the article is in the form of a film, sheet, molded part, or profile.

### DETAILED DESCRIPTION

The present invention may be understood more readily by reference to the following detailed description of certain embodiments of the invention and the working examples.

In accordance with the purpose(s) of this invention, certain embodiments of the invention are described in the Summary of the Invention and are further described herein below. Also, other embodiments of the invention are described herein.

The present invention provides a copolyester composition comprising a copolyester and a flame retardant additive in which the copolyester composition exhibits good flame retardancy, clarity and good puncture resistance, articles made therefrom, and methods of making the composition and articles. The present invention involves the use of a certain class flame retardant additives to improve the flame retardant properties while retaining impact and clarity properties. The flame retardant additive comprises a halogen-containing compound and has a melting temperature (melting point) (Tm) or a glass transition temperature (Tg) of 270ºC or less. When the flame retardant is added at the appropriate concentration with a copolyester, a flame retarded composition possesses a notched Izod impact strength which is greater than about 125 Joules/m, or 150, or 200, or 300, or 400 Joules/m or greater, according to ASTM D256 while achieving a UL94 V-0 rating or better. In embodiments, the copolyester composition exhibits 100% ductile behavior when tested according to ASTM D256 while achieving a UL94 V-0 rating or better. In embodiments, good clarity with low haze according to ASTM D1003 (as measured in the form of a plaque at approximately 3.2 mm thickness) is also maintained.

In embodiments, the halogen-containing compound is a bromine containing compound. Thus, in embodiments, the flame retardant additive comprises a bromine containing compound and has a Tm or Tg of 270ºC or less. In embodiments, the composition has a bromine content from 5 to 15 wt%. The bromine content can be determined by mass spectrometry by methods known in the art, such as inductively coupled plasma optical emission spectrometry (ICP-OES), inductively coupled plasma mass spectrometry (ICP-MS), or x-ray fluorescence spectroscopy (XRF). For purposes of this invention, bromine content in wt% can be determined by inductively coupled plasma optical emission spectrometry (ICP-OES). In embodiments, the additive comprises a bromine containing compound chosen from an aliphatic compound, an aromatic compound, or combinations thereof. In embodiments, the bromine containing compound is chosen from a tetrabromobisphemol A oligomer, a brominated epoxy resin, a bromophenoxy triazine compound, or combinations thereof. In one embodiment, the bromine containing compound is 2,4,6-tris(2,4,6-tribromophenoxy)-1,3,5 triazine.

In certain embodiments, the bromine containing compound can be a commercially available product, such as BroShield 58-B (St. Louis Group) or BC-58 (Lanxess) tetrabromobisphenol A oligomers; or Broshield 245 (St. Louis Group) or FR-245 (ICL) bromophenoxy triazine compounds.

In embodiments, the copolyester composition further comprises from about 1 to about 10 wt% of a flame retardant synergist additive. In certain embodiments, the flame retardant synergist additive comprises antimony. In certain embodiments, the flame retardant synergist additive comprises an antimony compound chosen from antimony trioxide, sodium antimonate, antimony pentoxide, or combinations thereof.

In certain embodiments, the flame retardant synergist additive can be a commercially available product, such as antimony trioxide, e.g., FireGard ATO or FireGard XF (St. Louis Group) or Ultrafine II (Lanxess); or sodium antimonate, e.g., FireGard SA (St. Louis Group) or Pyrobloc SAP-2 (Lanxess); or antimony pentoxide, e.g., FireGard APO (St. Louis Group).

Copolyesters useful in the present invention comprise residues of an aromatic diacid and residues of two or more glycols.

The term "copolyester," as used herein, is intended to include "polyesters" and is understood to mean a synthetic polymer prepared by the reaction of one or more difunctional carboxylic acids and/or multifunctional carboxylic acids with one or more difunctional hydroxyl compounds and/or multifunctional hydroxyl compounds. Typically the difunctional carboxylic acid can be a dicarboxylic acid and the difunctional hydroxyl compound can be a dihydric alcohol such as, for example, glycols. Furthermore, as used in this application, the interchangeable terms "diacid" or "dicarboxylic acid" include multifunctional acids, such as branching agents. The term "glycol" as used in this application includes, but is not limited to, diols, glycols, and/or multifunctional hydroxyl compounds. Alternatively, the difunctional carboxylic acid may be a hydroxy carboxylic acid such as, for example, p-hydroxybenzoic acid, and the difunctional hydroxyl compound may be an aromatic nucleus bearing 2 hydroxyl substituents such as, for example, hydroquinone. The term "residue," as used herein, means any organic structure incorporated into a polymer through a polycondensation and/or an esterification reaction from the corresponding monomer. The term "repeating unit," as used herein, means an organic structure having a dicarboxylic acid residue and a diol residue bonded through a carbonyloxy group. Thus, for example, the dicarboxylic acid residues may be derived from a dicarboxylic acid monomer or its associated acid halides, esters, salts, anhydrides, or mixtures thereof. As used herein, therefore, the term dicarboxylic acid is intended to include dicarboxylic acids and any derivative of a dicarboxylic acid, including its associated acid halides, esters, half-esters, salts, half-salts, anhydrides, mixed anhydrides, or mixtures thereof, useful in a reaction process with a diol to make polyester. As used herein, the term "terephthalic acid" is intended to include terephthalic acid itself and residues thereof as well as any derivative of terephthalic acid, including its associated acid halides, esters, half-esters, salts, half-salts, anhydrides, mixed anhydrides, or mixtures thereof or residues thereof useful in a reaction process with a diol to make polyester. The term "modifying aromatic diacid" means an aromatic dicarboxylic acid other than terephthalic acid. The term "modifying glycol" means a glycol other than cyclohexanedimethanol (CHDM) or 2,2,4,4-tetramethylcyclobutane-1,3-diol (TMCD).

In one embodiment, terephthalic acid may be used as the starting material. In another embodiment, dimethyl terephthalate may be used as the starting material. In another embodiment, mixtures of terephthalic acid and dimethyl terephthalate may be used as the starting material and/or as an intermediate material.

The copolyesters used in the present invention typically can be prepared from dicarboxylic acids and diols which react in substantially equal proportions and are incorporated into the copolyester polymer as their corresponding residues. The copolyesters of the present invention, therefore, can contain substantially equal molar proportions of acid residues (100 mole%) and diol (and/or multifunctional hydroxyl compounds) residues (100 mole%) such that the total moles of repeating units is equal to 100 mole%. The mole percentages provided in the present disclosure, therefore, may be based on the total moles of acid residues, the total moles of diol residues, or the total moles of repeating units. For example, a copolyester containing 30 mole% isophthalic acid, based on the total acid residues, means the copolyester contains 30 mole% isophthalic acid residues out of a total of 100 mole% acid residues. Thus, there are 30 moles of isophthalic acid residues among every 100 moles of acid residues. In another example, a copolyester containing 30 mole% 1,4-cyclohexanedimethanol, based on the total diol residues, means the copolyester contains 30 mole% 1,4-cyclohexanedimethanol residues out of a total of 100 mole% diol residues. Thus, there are 30 moles of 1,4-cyclohexanedimethanol residues among every 100 moles of diol residues.

In embodiments, the copolyesters comprise 70 to 100 mole % of terephthalic acid (TPA). Alternatively, the copolyesters comprise 80 to 100 mole % TPA, or 90 to 100 mole % TPA or 95 to 100 mole % TPA or 100 mole % TPA. For the purposes of this disclosure, the terms "terephthalic acid" and "dimethyl terephthalate" are used interchangeably herein.

In addition to terephthalic acid, the dicarboxylic acid component of the copolyester useful in the invention can comprise up to 30 mole %, up to 20 mole %, up to 10 mole %, up to 5 mole %, or up to 1 mole % of one or more modifying aromatic dicarboxylic acids. Yet another embodiment contains 0 mole % modifying aromatic dicarboxylic acids. Thus, if present, it is contemplated that the amount of one or more modifying aromatic dicarboxylic acids can range from any of these preceding endpoint values including, for example, from 0.01 to 30 mole %, 0.01 to 20 mole %, from 0.01 to 10 mole %, from 0.01 to 5 mole % and from 0.01 to 1 mole. In one embodiment, modifying aromatic dicarboxylic acids that may be used in the present invention include but are not limited to those having up to 20 carbon atoms, and which can be linear, para-oriented, or symmetrical. Examples of modifying aromatic dicarboxylic acids which may be used in this invention include, but are not limited to, isophthalic acid, 4,4'-biphenyldicarboxylic acid, 1,4-, 1,5-, 2,6-, 2,7-naphthalenedicarboxylic acid, and trans-4,4'-stilbenedicarboxylic acid, and esters thereof. In one embodiment, the modifying aromatic dicarboxylic acid is isophthalic acid.

The carboxylic acid component of the copolyesters useful in the invention can be further modified with up to 10 mole %, such as up to 5 mole % or up to 1 mole % of one or more aliphatic dicarboxylic acids containing 2-16 carbon atoms, such as, for example, malonic, succinic, glutaric, adipic, pimelic, suberic, azelaic and dodecanedioic dicarboxylic acids. Certain embodiments can also comprise 0.01 or more mole %, such as 0.1 or more mole %, 1 or more mole %, 5 or more mole %, or 10 or more mole % of one or more modifying aliphatic dicarboxylic acids. Yet another embodiment contains 0 mole % modifying aliphatic dicarboxylic acids. Thus, if present, it is contemplated that the amount of one or more modifying aliphatic dicarboxylic acids can range from any of these preceding endpoint values including, for example, from 0.01 to 10 mole % and from 0.1 to 10 mole %. The total mole % of the dicarboxylic acid component is 100 mole %.

Esters of terephthalic acid and the other modifying dicarboxylic acids or their corresponding esters and/or salts may be used instead of the dicarboxylic acids. Suitable examples of dicarboxylic acid esters include, but are not limited to, the dimethyl, diethyl, dipropyl, diisopropyl, dibutyl, and diphenyl esters. In one embodiment, the esters are chosen from at least one of the following: methyl, ethyl, propyl, isopropyl, and phenyl esters.

The copolyesters useful in the copolyesters compositions of the invention can comprise from 0 to 10 mole %, for example, from 0.01 to 5 mole %, from 0.01 to 1 mole %, from 0.05 to 5 mole %, from 0.05 to 1 mole %, or from 0.1 to 0.7 mole %, based the total mole percentages of either the diol or diacid residues; respectively, of one or more residues of a branching monomer, also referred to herein as a branching agent, having 3 or more carboxyl substituents, hydroxyl substituents, or a combination thereof. In certain embodiments, the branching monomer or agent may be added prior to and/or during and/or after the polymerization of the polyester. The copolyester(s) useful in the invention can thus be linear or branched.

Examples of branching monomers include, but are not limited to, multifunctional acids or multifunctional alcohols such as trimellitic acid, trimellitic anhydride, pyromellitic dianhydride, trimethylolpropane, glycerol, pentaerythritol, citric acid, tartaric acid, 3-hydroxyglutaric acid and the like. In one embodiment, the branching monomer residues can comprise 0.1 to 0.7 mole % of one or more residues chosen from at least one of the following: trimellitic anhydride, pyromellitic dianhydride, glycerol, sorbitol, 1,2,6-hexanetriol, pentaerythritol, trimethylolethane, and/or trimesic acid. The branching monomer may be added to the polyester reaction mixture or blended with the polyester in the form of a concentrate as described, for example, in U. S. Patent Numbers 5,654,347 and 5,696,76.

In embodiments, the CHDM can be 1,4-cyclohexanedimethanol. The 1,4-cyclohexanedimethanol may be cis, trans, or a mixture thereof, for example a cis/trans ratio of 60:40 to 40:60. In another embodiment, the trans-1,4-cyclohexanedimethanol can be present in an amount of 60 to 80 mole %. Alternatively, 1,2- and/or 1-3-cyclohexanedimethanol may be used individually or in combination with each other and/or 1,4-cyclohexanedimethanol.

The glycol component of the copolyester portion of the copolyester composition useful in the various embodiments can contain modifying glycols which are not CHDM or TMCD; in one embodiment, the copolyesters useful in the invention may contain less than 15 mole %, or 10 mole % or less, of one or more modifying glycols.

Modifying glycols useful in the copolyesters useful in embodiments refer to diols other than other than CHDM or TMCD and may contain 2 to 20, or 2 to 16, carbon atoms. Examples of suitable modifying glycols include, but are not limited to, ethylene glycol, 1,2-propanediol, 1,3-propanediol, neopentyl glycol, 1,4-butanediol, 1,5-pentanediol, 1,6-hexanediol, p-xylene glycol, isosorbide or mixtures thereof. In another embodiment, the modifying glycols are 1,3-propanediol and/or 1,4-butanediol.

In embodiments, the copolyester composition comprises at least one polyester, which comprises:
(a) a dicarboxylic acid component comprising:
   i) 70 to 100 mole % of terephthalic acid residues;
   ii) 0 to 30 mole % of aromatic dicarboxylic acid residues having up to 20 carbon atoms; and
   iii) 0 to 10 mole % of aliphatic dicarboxylic acid residues having up to 16 carbon atoms; and
(b) a glycol component comprising:
   i) 5 to 55 mole % of 2,2,4,4-tetramethyl-1,3-cyclobutanediol (TMCD) residues; and
   ii) 45 to 95 mole % of 1,4-cyclohexanedimethanol (CHDM) residues, wherein the total mole % of the dicarboxylic acid component is 100 mole %, the total mole % of the glycol component is 100 mole %; and
wherein the inherent viscosity of the polyester is from 0.5 to 1.2 dL/g as determined in 60/40 (wt/wt) phenol/tetrachloroethane at a concentration of 0.5 g/100 ml at 25° C.; and wherein the polyester has a Tg of from 100 to 200° C.

In embodiments, the polyester composition comprises at least one polyester, which comprises:
(a) a dicarboxylic acid component comprising:
   i) 70 to 100 mole % of terephthalic acid residues;
   ii) 0 to 30 mole % of aromatic dicarboxylic acid residues having up to 20 carbon atoms; and
   iii) 0 to 10 mole % of aliphatic dicarboxylic acid residues having up to 16 carbon atoms; and
(b) a glycol component comprising:
   i) 20 to 40 mole % of 2,2,4,4-tetramethyl-1,3-cyclobutanediol residues; and
   ii) 60 to 80 mole % of 1,4-cyclohexanedimethanol residues, wherein the total mole % of the dicarboxylic acid component is 100 mole %, the total mole % of the glycol component is 100 mole %; and
wherein the inherent viscosity of the polyester is from 0.35 to 0.85 dL/g as determined in 60/40 (wt/wt) phenol/tetrachloroethane at a concentration of 0.5 g/100 ml at 25° C.; and wherein the polyester has a Tg of from 100 to 120° C.

In embodiments, the polyester composition comprises at least one polyester, which comprises:
(a) a dicarboxylic acid component comprising:
   i) 70 to 100 mole % of terephthalic acid residues;
   ii) 0 to 30 mole % of aromatic dicarboxylic acid residues having up to 20 carbon atoms; and
   iii) 0 to 10 mole % of aliphatic dicarboxylic acid residues having up to 16 carbon atoms; and
(b) a glycol component comprising:
   i) 40 to 55 mole % of 2,2,4,4-tetramethyl-1,3-cyclobutanediol residues; and
   ii) 45 to 60 mole % of 1,4-cyclohexanedimethanol residues, wherein the total mole % of the dicarboxylic acid component is 100 mole %, the total mole % of the glycol component is 100 mole %; and
wherein the inherent viscosity of the polyester is from 0.35 to 0.85 dL/g as determined in 60/40 (wt/wt) phenol/tetrachloroethane at a concentration of 0.5 g/100 ml at 25° C.; and wherein the polyester has a Tg of from 120 to 140° C.

In embodiments, the polyester composition comprises at least one polyester, which comprises:
(a) a dicarboxylic acid component comprising:
   i) 70 to 100 mole % of terephthalic acid residues;
   ii) 0 to 30 mole % of aromatic dicarboxylic acid residues having up to 20 carbon atoms; and
   iii) 0 to 10 mole % of aliphatic dicarboxylic acid residues having up to 16 carbon atoms; and
(b) a glycol component comprising:
   i) 15 to 70 mole % of 2,2,4,4-tetramethyl-1,3-cyclobutanediol residues; and
   ii) 30 to 85 mole % of 1,4-cyclohexanedimethanol residues, wherein the total mole % of the dicarboxylic acid component is 100 mole %, the total mole % of the glycol component is 100 mole %; and
wherein the inherent viscosity of the polyester is from 0.35 to 0.85 dL/g as determined in 60/40 (wt/wt) phenol/tetrachloroethane at a concentration of 0.5 g/100 ml at 25° C.; and wherein the polyester has a Tg of from 100 to 140° C.

In embodiments, the polyester composition comprises at least one polyester, which comprises:
(a) a dicarboxylic acid component comprising:
   i) 70 to 100 mole % of terephthalic acid residues;
   ii) 0 to 30 mole % of aromatic dicarboxylic acid residues having up to 20 carbon atoms; and
   iii) 0 to 10 mole % of aliphatic dicarboxylic acid residues having up to 16 carbon atoms; and
(b) a glycol component comprising:
   i) 15 to 90 mole % of 2,2,4,4-tetramethyl-1,3-cyclobutanediol residues; and
   ii) 10 to 85 mole % of 1,4-cyclohexanedimethanol residues, wherein the total mole % of the dicarboxylic acid component is 100 mole %, the total mole % of the glycol component is 100 mole %; and
wherein the inherent viscosity of the polyester is from 0.1 to 1.2 dL/g as determined in 60/40 (wt/wt) phenol/tetrachloroethane at a concentration of 0.5 g/100 ml at 25° C.; and wherein the polyester has a Tg of from 100 to 200° C.

In embodiments, any one of the polyesters or polyester compositions described herein can further comprise residues of at least one branching agent. In embodiments, any one of the polyesters or polyester compositions described herein can comprise at least one thermal stabilizer or reaction products thereof.

In embodiments, the polyester composition contains at least one polycarbonate. In other embodiments, the polyester composition contains no polycarbonate.

In embodiments, the polyesters can contain less than 15 mole % ethylene glycol residues, such as, for example, 0.01 to less than 15 mole % ethylene glycol residues. In embodiments, the polyesters useful in the invention contain less than 10 mole %, or less than 5 mole %, or less than 4 mole %, or less than 2 mole %, or less than 1 mole % ethylene glycol residues, such as, for example, 0.01 to less than 10 mole %, or 0.01 to less than 5 mole %, or 0.01 to less than 4 mole %, or 0.01 to less than 2 mole %, or 0.01 to less than 1 mole %, ethylene glycol residues. In one embodiment, the polyesters useful in the invention contain no ethylene glycol residues

In other embodiments, the glycol component for the polyesters can include but is not limited to at least one of the following combinations of ranges: 5 to less than 55 mole % 2,2,4,4-tetramethyl-1,3-cyclobutanediol and greater than 45 up to 95 mole % 1,4-cyclohexanedimethanol; 5 to less than 50 mole % 2,2,4,4-tetramethyl-1,3-cyclobutanediol and greater than 50 up to 95 mole % 1,4-cyclohexanedimethanol; 5 to less than 45 mole % 2,2,4,4-tetramethyl-1,3-cyclobutanediol and greater than 55 up to 95 mole % 1,4-cyclohexanedimethanol; 5 to less than 40 mole % 2,2,4,4-tetramethyl-1,3-cyclobutanediol and greater than 60 up to 95 mole % 1,4-cyclohexanedimethanol; 10 to 40 mole % 2,2,4,4-tetramethyl-1,3-cyclobutanediol and 60 to 90 mole % 1,4-cyclohexanedimethanol; 10 to 35 mole % 2,2,4,4-tetramethyl-1,3-cyclobutanediol and 65 to 90 mole % 1,4-cyclohexanedimethanol; 10 to 30 mole % 2,2,4,4-tetramethyl-1,3-cyclobutanediol and 70 to 90 mole % 1,4-cyclohexanedimethanol; 10 to 25 mole % 2,2,4,4-tetramethyl-1,3-cyclobutanediol and 75 to 90 mole % 1,4-cyclohexanedimethanol; 15 to 40 mole % 2,2,4,4-tetramethyl-1,3-cyclobutanediol and 60 to 85 mole % 1,4-cyclohexanedimethanol; 15 to 35 mole % 2,2,4,4-tetramethyl-1,3-cyclobutanediol and 65 to 85 mole % 1,4-cyclohexanedimethanol; 15 to 30 mole % 2,2,4,4-tetramethyl-1,3-cyclobutanediol and 70 to 85 mole % 1,4-cyclohexanedimethanol; 15 to 25 mole % 2,2,4,4-tetramethyl-1,3-cyclobutanediol and 75 to 85 mole % 1,4-cyclohexanedimethanol; 15 to 20 mole % 2,2,4,4-tetramethyl-1,3-cyclobutanediol and 75 to 80 mole % 1,4-cyclohexanedimethanol; and 17 to 23 mole % 2,2,4,4-tetramethyl-1,3-cyclobutanediol and 77 to 83 mole % 1,4-cyclohexanedimethanol.

In certain embodiments, the glycol component of the polyester portion of the polyester composition can contain 25 mole % or less of one or more modifying glycols which are not 2,2,4,4-tetramethyl-1,3-cyclobutanediol or 1,4-cyclohexanedimethanol; in one embodiment, the polyesters useful in the invention may contain less than 15 mole % of one or more modifying glycols. In another embodiment, the polyesters can contain 10 mole % or less of one or more modifying glycols. In another embodiment, the polyesters can contain 5 mole % or less of one or more modifying glycols. In another embodiment, the polyesters can contain 3 mole % or less of one or more modifying glycols. In another embodiment, the polyesters can contain 0 mole % modifying glycols. Certain embodiments can also contain 0.01 or more mole %, such as 0.1 or more mole %, 1 or more mole %, 5 or more mole %, or 10 or more mole % of one or more modifying glycols. Thus, if present, it is contemplated that the amount of one or more modifying glycols can range from any of these preceding endpoint values including, for example, from 0.01 to 15 mole % and from 0.1 to 10 mole %.

In embodiments, modifying glycols in the polyesters can refer to diols other than 2,2,4,4,-tetramethyl-1,3-cyclobutanediol and 1,4-cyclohexanedimethanol and may contain 2 to 16 carbon atoms. Examples of suitable modifying glycols in certain embodiments include, but are not limited to, ethylene glycol, 1,2-propanediol, 1,3-propanediol, neopentyl glycol, 1,4-butanediol, 1,5-pentanediol, 1,6-hexanediol, p-xylene glycol or mixtures thereof. In one embodiment, the modifying glycol is ethylene glycol. In another embodiment, the modifying glycols are 1,3-propanediol and/or 1,4-butanediol. In another embodiment, ethylene glycol is excluded as a modifying diol. In another embodiment, 1,3-propanediol and 1,4-butanediol are excluded as modifying diols. In another embodiment, 2,2-dimethyl-1,3-propanediol is excluded as a modifying diol.

In embodiments, the mole % of cis-2,2,4,4-tetramethyl-1,3-cyclobutanediol in certain polyesters is greater than 50 mole % or greater than 55 mole % of cis-2,2,4,4-tetramethyl-1,3-cyclobutanediol or greater than 70 mole % of cis-2,2,4,4-tetramethyl-1,3-cyclobutanediol; wherein the total mole percentage of cis-2,2,4,4-tetramethyl-1,3-cyclobutanediol and trans-2,2,4,4-tetramethyl-1,3-cyclobutanediol is equal to a total of 100 mole %.

In embodiments, the mole % of the isomers of 2,2,4,4-tetramethyl-1,3-cyclobutanediol in certain polyesters is from 30 to 70 mole % of cis-2,2,4,4-tetramethyl-1,3-cyclobutanediol or from 30 to 70 mole % of trans-2,2,4,4-tetramethyl-1,3-cyclobutanediol, or from 40 to 60 mole % of cis-2,2,4,4-tetramethyl-1,3-cyclobutanediol or from 40 to 60 mole % of trans-2,2,4,4-tetramethyl-1,3-cyclobutanediol, wherein the total mole percentage of cis-2,2,4,4-tetramethyl-1,3-cyclobutanediol and trans-2,2,4,4-tetramethyl-1,3-cyclobutanediol is equal to a total of 100 mole %.

In certain embodiments, the polyesters can be amorphous or semi-crystalline. In one aspect, certain polyesters can have a relatively low crystallinity. Certain polyesters can thus have a substantially amorphous morphology, meaning that the polyesters comprise substantially unordered regions of polymer.

In embodiments, the Tg of the polyesters can be at least one of the following ranges: 100 to 200° C.; 100 to 190° C.; 100 to 180° C.; 100 to 170° C.; 100 to 160° C.; 100 to 155° C.; 100 to 150° C.; 100 to 145° C.; 100 to 140° C.; 100 to 138° C.; 100 to 135° C.; 100 to 130° C.; 100 to 125° C.; 100 to 120° C.; 100 to 115° C.; 100 to 110° C.; 105 to 200° C.; 105 to 190° C.; 105 to 180° C.; 105 to 170° C.; 105 to 160° C.; 105 to 155° C.; 105 to 150° C.; 105 to 145° C.; 105 to 140° C.; 105 to 138° C.; 105 to 135° C.; 105 to 130° C.; 105 to 125° C.; 105 to 120° C.; 105 to 115° C.; 105 to 110° C. greater than 105 to 125° C.; greater than 105 to 120° C.; greater than 105 to 115° C.; greater than 105 to 110° C.; 110 to 200° C.; 110 to 190° C.; 110 to 180° C.; 110 to 170° C.; 110 to 160° C.; 110 to 155° C.; 110 to 150° C.; 110 to 145° C.; 110 to 140° C.; 110 to 138° C.; 110 to 135° C.; 110 to 130° C.; 110 to 125° C.; 110 to 120° C.; 110 to 115° C.; 115to 200° C.; 115 to 190° C.; 115 to 180° C.; 115 to 170° C.; 115 to 160° C.; 115to 155° C.; 115 to 150° C.; 115 to 145° C.; 115 to 140° C.; 115 to 138° C.; 115 to 135° C.; 110 to 130° C.; 115 to 125° C.; 115 to 120° C.; 120 to 200° C.; 120 to 190° C.; 120 to 180° C.; 120 to 170° C.; 120 to 160° C.; 120 to 155° C.; 120 to 150° C.; 120 to 145° C.; 120 to 140° C.; 120 to 138° C.; 120 to 135° C.; 120 to 130° C.; 125 to 200° C.; 125 to 190° C.; 125 to 180° C.; 125 to 170° C.; 125 to 160° C; 125 to 155° C.; 125 to 150° C.; 125 to 145° C.; 125 to 140° C.; 125 to 138° C.; 125 to 135° C.; 127 to 200° C.; 127 to 190° C.; 127 to 180° C.; 127 to 170° C.; 127 to 160° C.; 127 to 150° C.; 127 to 145° C.; 127 to 140° C.; 127 to 138° C.; 127 to 135° C.; 130 to 200° C.; 130 to 190° C.; 130 to 180° C.; 130 to 170° C.; 130 to 160° C.; 130 to 155° C.; 130 to 150° C.; 130 to 145° C.; 130 to 140° C.; 130 to 138° C.; 130 to 135° C.; 135 to 200° C.; 135 to 190° C.; 135 to 180° C.; 135 to 170° C.; 135 to 160° C.; 135 to 155° C.; 135 to 150° C.; 135 to 145° C.; 135 to 140° C.; 140 to 200° C.; 140 to 190° C; 140 to 180° C.; 140 to 170° C.; 140 to 160° C.; 140 to 155° C.; 140 to 150° C.; 140 to 145° C.; 148 to 200° C.; 148 to 190° C.; 148 to 180° C.; 148 to 170° C.; 148 to 160° C.; 148 to 155° C.; 148 to 150° C.; 150 to 200° C.; 150 to 190° C.; 150 to 180° C.; 150 to 170° C.; 150 to 160; 155 to 190° C.; 155 to 180° C.; 155 to 170° C.; and 155 to 165° C.

The glass transition temperature (Tg) of the polyesters can be determined using a TA DSC 2920 from Thermal Analyst Instrument at a scan rate of 20° C./min.

For certain embodiments, the polyesters may exhibit at least one of the following inherent viscosities as determined in 60/40 (wt/wt) phenol/tetrachloroethane at a concentration of 0.5 g/100 ml at 25° C.: 0.10 to 1.2 dL/g; 0.10 to 1.1 dL/g; 0.10 to 1 dL/g; 0.10 to less than 1 dL/g; 0.10 to 0.98 dL/g; 0.10 to 0.95 dL/g; 0.10 to 0.90 dL/g; 0.10 to 0.85 dL/g; 0.10 to 0.80 dL/g; 0.10 to 0.75 dL/g; 0.10 to less than 0.75 dL/g; 0.10 to 0.72 dL/g; 0.10 to 0.70 dL/g; 0.10 to less than 0.70 dL/g; 0.10 to 0.68 dL/g; 0.10 to less than 0.68 dL/g; 0.10 to 0.65 dL/g; 0.20 to 1.2 dL/g; 0.20 to 1.1 dL/g; 0.20 to 1 dL/g; 0.20 to less than 1 dL/g; 0.20 to 0.98 dL/g; 0.20 to 0.95 dL/g; 0.20 to 0.90 dL/g; 0.20 to 0.85 dL/g; 0.20 to 0.80 dL/g; 0.20 to 0.75 dL/g; 0.20 to less than 0.75 dL/g; 0.20 to 0.72 dL/g; 0.20 to 0.70 dL/g; 0.20 to less than 0.70 dL/g; 0.20 to 0.68 dL/g; 0.20 to less than 0.68 dL/g; 0.20 to 0.65 dL/g; 0.35 to 1.2 dL/g; 0.35 to 1.1 dL/g; 0.35 to 1 dL/g; 0.35 to less than 1 dL/g; 0.35 to 0.98 dL/g; 0.35 to 0.95 dL/g; 0.35 to 0.90 dL/g; 0.35 to 0.85 dL/g; 0.35 to 0.80 dL/g; 0.35 to 0.75 dL/g; 0.35 to less than 0.75 dL/g; 0.35 to 0.72 dL/g; 0.35 to 0.70 dL/g; 0.35 to less than 0.70 dL/g; 0.35 to 0.68 dL/g; 0.35 to less than 0.68 dL/g; 0.35 to 0.65 dL/g; 0.40 to 1.2 dL/g; 0.40 to 1.1 dL/g; 0.40 to 1 dL/g; 0.40 to less than 1 dL/g; 0.40 to 0.98 dL/g; 0.40 to 0.95 dL/g; 0.40 to 0.90 dL/g; 0.40 to 0.85 dL/g; 0.40 to 0.80 dL/g; 0.40 to 0.75 dL/g; 0.40 to less than 0.75 dL/g; 0.40 to 0.72 dL/g; 0.40 to 0.70 dL/g; 0.40 to less than 0.70 dL/g; 0.40 to 0.68 dL/g; 0.40 to less than 0.68 dL/g; 0.40 to 0.65 dL/g; greater than 0.42 to 1.2 dL/g; greater than 0.42 to 1.1 dL/g; greater than 0.42 to 1 dL/g; greater than 0.42 to less than 1 dL/g; greater than 0.42 to 0.98 dL/g; greater than 0.42 to 0.95 dL/g; greater than 0.42 to 0.90 dL/g; greater than 0.42 to 0.85 dL/g; greater than 0.42 to 0.80 dL/g; greater than 0.42 to 0.75 dL/g; greater than 0.42 to less than 0.75 dL/g; greater than 0.42 to 0.72 dL/g; greater than 0.42 to less than 0.70 dL/g; greater than 0.42 to 0.68 dL/g; greater than 0.42 to less than 0.68 dL/g; and greater than 0.42 to 0.65 dL/g.

For certain embodiments, the polyesters may exhibit at least one of the following inherent viscosities as determined in 60/40 (wt/wt) phenol/tetrachloroethane at a concentration of 0.5 g/100 ml at 25° C: 0.45 to 1.2 dL/g; 0.45 to 1.1 dL/g; 0.45 to 1 dL/g; 0.45 to 0.98 dL/g; 0.45 to 0.95 dL/g; 0.45 to 0.90 dL/g; 0.45 to 0.85 dL/g; 0.45 to 0.80 dL/g; 0.45 to 0.75 dL/g; 0.45 to less than 0.75 dL/g; 0.45 to 0.72 dL/g; 0.45 to 0.70 dL/g; 0.45 to less than 0.70 dL/g; 0.45 to 0.68 dL/g; 0.45 to less than 0.68 dL/g; 0.45 to 0.65 dL/g; 0.50 to 1.2 dL/g; 0.50 to 1.1 dL/g; 0.50 to 1 dL/g; 0.50 to less than 1 dL/g; 0.50 to 0.98 dL/g; 0.50 to 0.95 dL/g; 0.50 to 0.90 dL/g; 0.50 to 0.85 dL/g; 0.50 to 0.80 dL/g; 0.50 to 0.75 dL/g; 0.50 to less than 0.75 dL/g; 0.50 to 0.72 dL/g; 0.50 to 0.70 dL/g; 0.50 to less than 0.70 dL/g; 0.50 to 0.68 dL/g; 0.50 to less than 0.68 dL/g; 0.50 to 0.65 dL/g; 0.55 to 1.2 dL/g; 0.55 to 1.1 dL/g; 0.55 to 1 dL/g; 0.55 to less than 1 dL/g; 0.55 to 0.98 dL/g; 0.55 to 0.95 dL/g; 0.55 to 0.90 dL/g; 0.55 to 0.85 dL/g; 0.55 to 0.80 dL/g; 0.55 to 0.75 dL/g; 0.55 to less than 0.75 dL/g; 0.55 to 0.72 dL/g; 0.55 to 0.70 dL/g; 0.55 to less than 0.70 dL/g; 0.55 to 0.68 dL/g; 0.55 to less than 0.68 dL/g; 0.55 to 0.65 dL/g; 0.58 to 1.2 dL/g; 0.58 to 1.1 dL/g; 0.58 to 1 dL/g; 0.58 to less than 1 dL/g; 0.58 to 0.98 dL/g; 0.58 to 0.95 dL/g; 0.58 to 0.90 dL/g; 0.58 to 0.85 dL/g; 0.58 to 0.80 dL/g; 0.58 to 0.75 dL/g; 0.58 to less than 0.75 dL/g; 0.58 to 0.72 dL/g; 0.58 to 0.70 dL/g; 0.58 to less than 0.70 dL/g; 0.58 to 0.68 dL/g; 0.58 to less than 0.68 dL/g; 0.58 to 0.65 dL/g; 0.60 to 1.2 dL/g; 0.60 to 1.1 dL/g; 0.60 to 1 dL/g; 0.60 to less than 1 dL/g; 0.60 to 0.98 dL/g; 0.60 to 0.95 dL/g; 0.60 to 0.90 dL/g; 0.60 to 0.85 dL/g; 0.60 to 0.80 dL/g; 0.60 to 0.75 dL/g; 0.60 to less than 0.75 dL/g; 0.60 to 0.72 dL/g; 0.60 to 0.70 dL/g; 0.60 to less than 0.70 dL/g; 0.60 to 0.68 dL/g; 0.60 to less than 0.68 dL/g; 0.60 to 0.65 dL/g; 0.65 to 1.2 dL/g; 0.65 to 1.1 dL/g; 0.65 to 1 dL/g; 0.65 to less than 1 dL/g; 0.65 to 0.98 dL/g; 0.65 to 0.95 dL/g; 0.65 to 0.90 dL/g; 0.65 to 0.85 dL/g; 0.65 to 0.80 dL/g; 0.65 to 0.75 dL/g; 0.65 to less than 0.75 dL/g; 0.65 to 0.72 dL/g; 0.65 to 0.70 dL/g; 0.65 to less than 0.70 dL/g; 0.68 to 1.2 dL/g; 0.68 to 1.1 dL/g; 0.68 to 1 dL/g; 0.68 to less than 1 dL/g; 0.68 to 0.98 dL/g; 0.68 to 0.95 dL/g; 0.68 to 0.90 dL/g; 0.68 to 0.85 dL/g; 0.68 to 0.80 dL/g; 0.68 to 0.75 dL/g; 0.68 to less than 0.75 dL/g; 0.68 to 0.72 dL/g; greater than 0.76 dug to 1.2 dL/g; greater than 0.76 dL/g to 1.1 dL/g; greater than 0.76 dL/g to 1 dL/g; greater than 0.76 dL/g to less than 1 dL/g; greater than 0.76 dL/g to 0.98dL/g; greater than 0.76 dL/g to 0.95 dL/g; greater than 0.76 dL/g to 0.90 dL/g; greater than 0.80 dL/g to 1.2 dL/g; greater than 0.80 dL/g to 1.1 dL/g; greater than 0.80 dL/g to 1 dL/g; greater than 0.80 dL/g to less than 1 dL/g; greater than 0.80 dL/g to 1.2 dL/g; greater than 0.80 dL/g to 0.98dL/g; greater than 0.80 dL/g to 0.95 dL/g; greater than 0.80 dL/g to 0.90 dL/g.

In certain embodiments, it is contemplated that the polyester compositions can possess at least one of the inherent viscosity ranges described herein and at least one of the monomer ranges for the compositions described herein unless otherwise stated. It is also contemplated that the polyester compositions can possess at least one of the Tg ranges described herein and at least one of the monomer ranges for the compositions described herein unless otherwise stated. It is also contemplated that the polyester compositions can possess at least one of the Tg ranges described herein, at least one of the inherent viscosity ranges described herein, and at least one of the monomer ranges for the compositions described herein unless otherwise stated.

In embodiments, the molar ratio of cis/trans 2,2,4,4-tetramethyl-1,3-cyclobutanediol can vary from the pure form of each or mixtures thereof. In certain embodiments, the molar percentages for cis and/or trans 2,2,4,4,-tetramethyl-1,3-cyclobutanediol are greater than 50 mole % cis and less than 50 mole % trans; or greater than 55 mole % cis and less than 45 mole % trans; or 30 to 70 mole % cis and 70 to 30% trans; or 40 to 60 mole % cis and 60 to 40 mole % trans; or 50 to 70 mole % trans and 50 to 30% cis or 50 to 70 mole % cis and 50 to 30% trans; or 60 to 70 mole % cis and 30 to 40 mole % trans; or greater than 70 mole cis and less than 30 mole % trans; wherein the total sum of the mole percentages for cis- and trans-2,2,4,4-tetramethyl-1,3-cyclobutanediol is equal to 100 mole %. The molar ratio of cis/trans 1,4-cyclohexandimethanol can vary within the range of 50/50 to 0/100, such as between 40/60 to 20/80.

In one embodiment, when the polyesters are blended with polycarbonate, including bisphenol A polycarbonates, the blends can be visually clear. In embodiments, the polyesters can possess one or more of the properties described herein. In embodiments, the polyesters can have a yellowness index (ASTM D-1925) of less than 50, such as less than 20.

In embodiments, the polyesters and/or the polyester compositions of the invention, with or without toners, can have color values L*, a* and b*, which can be determined using a Hunter Lab Ultrascan Spectra Colorimeter manufactured by Hunter Associates Lab Inc., Reston, Va. The color determinations are averages of values measured on either pellets of the polyesters or plaques or other items injection molded or extruded from them They are determined by the L*a*b* color system of the CIE (International Commission on Illumination) (translated), wherein L* represents the lightness coordinate, a* represents the red/green coordinate, and b* represents the yellow/blue coordinate. In certain embodiments, the b* values for the polyesters useful in the invention can be from -10 to less than 10 and the L* values can be from 50 to 90. In other embodiments, the b* values for the polyesters useful in the invention can be present in one of the following ranges: -10 to 9; -10 to 8; -10 to 7; -10 to 6; -10 to 5; -10 to 4; -10 to 3; -10 to 2; from -5 to 9; -5 to 8; -5 to 7; -5 to 6; -5 to 5; -5 to 4; -5 to 3; -5 to 2; 0 to 9; 0 to 8; 0 to 7; 0 to 6; 0 to 5; 0 to 4; 0 to 3; 0 to 2; 1 to 10; 1 to 9; 1 to 8; 1 to 7; 1 to 6; 1 to 5; 1 to 4; 1 to 3; and 1 to 2. In other embodiments, the L* value for the polyesters useful in the invention can be present in one of the following ranges: 50 to 60; 50 to 70; 50 to 80; 50 to 90; 60 to 70; 60 to 80; 60 to 90; 70 to 80; 79 to 90.

The polyester portion of the polyester compositions can be made by processes known from the literature such as, for example, by processes in homogenous solution, by transesterification processes in the melt, and by two phase interfacial processes. Suitable methods include those disclosed in U.S. Published Application 2006/0287484.

In embodiments, the polyester can be prepared by a method that includes reacting one or more dicarboxylic acids (or derivative thereof) with one or more glycols under conditions to provide the polyester including, but are not limited to, the steps of reacting one or more dicarboxylic acids (or derivative thereof) with one or more glycols at a temperature of 100°C to 315°C at a pressure of 0.1 to 760 mm Hg for a time sufficient to form a polyester. See U.S. Pat. No. 3,772,405 for methods of producing polyesters.

In embodiments, the polyester composition can be a polymer blend, wherein the blend comprises: (a) 5 to 95 wt % of at least one of the polyesters described herein; and (b) 5 to 95 wt % of at least one polymeric component. Suitable examples of polymeric components include, but are not limited to, nylon, polyesters different from those described herein, polyamides such as ZYTEL^{®} from DuPont; polystyrene, polystyrene copolymers, styrene acrylonitrile copolymers, acrylonitrile butadiene styrene copolymers, poly(methylmethacrylate), acrylic copolymers, poly(ether-imides) such as ULTEM^{®} (a poly(ether-imide) from General Electric); polyphenylene oxides such as poly(2,6-dimethylphenylene oxide) or poly(phenylene oxide)/polystyrene blends such as NORYL 1000^{®} (a blend of poly(2,6-dimethylphenylene oxide) and polystyrene resins from General Electric); polyphenylene sulfides; polyphenylene sulfide/sulfones; poly(ester-carbonates); polycarbonates such as LEXAN^{®} (a polycarbonate from General Electric); polysulfones; polysulfone ethers; and poly(etherketones) of aromatic dihydroxy compounds; or mixtures of any of the other foregoing polymers. The blends can be prepared by conventional processing techniques known in the art, such as melt blending or solution blending. In one embodiment, the polycarbonate is not present in the polyester composition. However, the polyester compositions useful in the invention also contemplate the exclusion of polycarbonate as well as the inclusion of polycarbonate.

In addition, the copolyester composition may further comprise one or more additional additives chosen from colorants, dyes, mold release agents, additional flame retardants, plasticizers, processing aids, rheology modifiers, nucleating agents, antioxidants, light stabilizers, fillers, and reinforcing materials.

In embodiments, the polyester compositions and the polymer blend compositions may also contain from 0.01 to 25% by weight of the overall composition common additives such as colorants, dyes, mold release agents, flame retardants, plasticizers, nucleating agents, stabilizers, including but not limited to, UV stabilizers, thermal stabilizers and/or reaction products thereof, fillers, and impact modifiers. For example, UV additives can be incorporated into the articles (e.g., ophthalmic product(s)) through addition to the bulk or in the hard coat. Examples of typical commercially available impact modifiers well known in the art and useful in this invention include, but are not limited to, ethylene/propylene terpolymers; functionalized polyolefins, such as those containing methyl acrylate and/or glycidyl methacrylate; styrene-based block copolymeric impact modifiers, epoxide-functionalized impact modifiers, and various acrylic core/shell type impact modifiers. Residues of such additives are also contemplated as part of the polyester composition. In one embodiment, the composition comprises an epoxide-functionalized impact modifier.

In one aspect, the copolyester compositions of the present invention comprise a copolyester composition comprising any of the copolyesters described above and the halogen-containing compound flame retardant.

In one embodiment, molded samples of the invention can be measured for optical (light transmission and haze) using ASTM D 1003. These measurements can be performed on samples in the form of a plaque at approximately 3.2 mm thickness. The term "% haze", as used herein, refers to haze values determined according to ASTM Method D1003 using a HunterLab UltraScan Sphere 8000 Colorimeter manufactured by Hunter Associates Laboratory, Inc., Reston, Va. using Hunter's Universal Software (version 3.8) (% Haze=100*Diffuse Transmission/Total Transmission). For the compositions of the invention, haze is determined by molding or casting the composition into in the form of a plaque at approximately 3.2 mm thickness and measuring the haze according to D1003 and/or the procedure described in the examples.

In one aspect of the invention, each embodiment of the invention can have haze values of from 0 to 10, or 0 to 5, or 1 to 10, or 1 to 5, or 5 to 10 percent as determined by ASTM Method D1003 referred to above. While these haze values can be present at any percent loading, in one embodiment, the polymer blends of the invention can have a haze value of less than 10% at up to 20% by weight of at least one flame retardant wherein the haze value is determined by ASTM Method D1003 as described above and where the weight percentage of the flame retardant is based on the total weight of the copolyester.

In embodiments, the polyesters can comprise at least one chain extender. Suitable chain extenders include, but are not limited to, multifunctional (including, but not limited to, bifunctional) isocyanates, multifunctional epoxides, including for example, epoxylated novolacs, and phenoxy resins. In certain embodiments, chain extenders may be added at the end of the polymerization process or after the polymerization process. If added after the polymerization process, chain extenders can be incorporated by compounding or by addition during conversion processes such as injection molding or extrusion. The amount of chain extender used can vary depending on the specific monomer composition used and the physical properties desired but is generally from 0.1 percent by weight to 10 percent by weight, such as from 0.1 to 5 percent by weight, based on the total weigh of the polyester.

Thermal stabilizers are compounds that stabilize polyesters during polyester manufacture and/or post polymerization, including, but not limited to, phosphorous compounds, including, but not limited to, phosphoric acid, phosphorous acid, phosphonic acid, phosphinic acid, phosphonous acid, and various esters and salts thereof. The esters can be alkyl, branched alkyl, substituted alkyl, difunctional alkyl, alkyl ethers, aryl, and substituted aryl. In one embodiment, the number of ester groups present in the particular phosphorous compound can vary from zero up to the maximum allowable based on the number of hydroxyl groups present on the thermal stabilizer used. The term "thermal stabilizer" is intended to include the reaction product(s) thereof. The term "reaction product" as used in connection with the thermal stabilizers of the invention refers to any product of a polycondensation or esterification reaction between the thermal stabilizer and any of the monomers used in making the polyester as well as the product of a polycondensation or esterification reaction between the catalyst and any other type of additive. In embodiments, these can be present in the polyester compositions.

In embodiments, reinforcing materials may be useful in the polyester compositions. The reinforcing materials may include, but are not limited to, carbon filaments, silicates, mica, clay, talc, titanium dioxide, Wollastonite, glass flakes, glass beads and fibers, and polymeric fibers and combinations thereof. In one embodiment, the reinforcing materials are glass, such as, fibrous glass filaments, mixtures of glass and talc, glass and mica, and glass and polymeric fibers.

Certain embodiments of the present invention comprise a copolyester composition comprising any of the copolyesters described herein, the halogen-containing compound flame retardant and from 0.1 to 10.0 weight % of a processing additive. In embodiments, the processing additive is a drip suppressant. Certain embodiments of the present invention comprise a copolyester composition comprising any of the copolyesters described herein, the halogen-containing compound flame retardant, and from 0.1 to 2.0 weight % of a drip suppressant. The drip suppressant can comprise a fluoropolymer. The fluoropolymer can includes, but is not limited to, Teflon^{™} polytetrafluoroethylene.

In another aspect, the invention relates to copolyester compositions comprising a copolyester produced by a process comprising:
(I) heating a mixture comprising the monomers useful in any of the copolyesters in the invention in the presence of a catalyst at a temperature of 150 to 240°C for a time sufficient to produce an initial copolyester;
(II) heating the initial copolyester of step (I) at a temperature of 240 to 320°C for 1 to 4 hours; and
(III) removing any unreacted glycols.

Suitable catalysts for use in this process include, but are not limited to, organo-zinc or tin compounds. The use of this type of catalyst is well known in the art. Examples of catalysts useful in the present invention include, but are not limited to, zinc acetate, butyltin tris-2-ethylhexanoate, dibutyltin diacetate, and dibutyltin oxide. Other catalysts may include, but are not limited to, those based on titanium, zinc, manganese, lithium, germanium, and cobalt. Catalyst amounts can range from 10 ppm to 20,000 ppm or 10 to 10,000 ppm, or 10 to 5000 ppm or 10 to 1000 ppm or 10 to 500 ppm, or 10 to 300 ppm or 10 to 250 based on the catalyst metal and based on the weight of the final polymer. The process can be carried out in either a batch or continuous process.

Typically, step (I) can be carried out until 50% by weight or more of the glycol has been reacted. Step (I) may be carried out under pressure, ranging from atmospheric pressure to 100 psig. The term "reaction product" as used in connection with any of the catalysts useful in the invention refers to any product of a polycondensation or esterification reaction with the catalyst and any of the monomers used in making the polyester as well as the product of a polycondensation or esterification reaction between the catalyst and any other type of additive.

Typically, step (II) and step (III) can be conducted at the same time. These steps can be carried out by methods known in the art such as by placing the reaction mixture under a pressure ranging from 0.002 psig to below atmospheric pressure, or by blowing hot nitrogen gas over the mixture.

In one embodiment, a copolyester composition concentrate is provided that comprises the copolyester and a halogen-containing (e.g., bromine-containing) compound flame retardant, wherein the concentrate comprises greater than 15 weight % of the flame retardant based on the total weight of the concentrate. In one aspect the invention comprises a copolyester composition concentrate comprising the copolyester and a flame retardant consisting essentially of a brominated compound having a Tm or Tg of 270C or less, wherein the concentrate comprises greater than 15 weight % of the flame retardant based on the total weight of the concentrate. In one aspect the invention comprises a copolyester composition concentrate comprising the copolyester and a flame retardant consisting essentially of BroShield^{®} 58-B or Lanxess BC-58 tetrabromobisphenyl A oligomer, wherein the concentrate comprises greater than 15 weight % of the flame retardant based on the total weight of the concentrate. In one aspect the invention comprises a copolyester composition concentrate comprising the copolyester and a flame retardant consisting essentially of BroShield^{®} 245 or ICL FR-245 2,4,6-tris(2,4,6-tribromophenoxy)-1,3,5 triazine, wherein the concentrate comprises greater than 15 weight % of the flame retardant based on the total weight of the concentrate. Alternatively, the flame retardant in the concentrate may comprise more than 20 weight % or more than 30 weight % or more than 40 weight % or more than 50 weight % or more than 60 weight % or more than 70 weight % or more than 80 weight % or more than 90 weight % of the copolyester concentrate based on the total weight of the concentrate.

The flame retardant can be incorporated into the copolyester in a concentrate form by any conventional method for ultimate formation into an article.

The flame retardant can be incorporated in a plastics compounding line such as a twin-screw compounding line to form a copolyester composition concentrate. In this case copolyester pellets are dried for 4 to 6 hours at 150°F to 190°F (65.6°C to 87.8°C) to reduce moisture. The pellets are then fed into the throat of the extruder and melted from 430°F to 520°F (221°C to 271°C) to produce a viscous thermoplastic material. Alternatively, the flame retardant is pre-blended and added as a single powder with a loss-in-weight feeder or added singly in a loss-in-weight feeder. The rotation of the two screws disperses the flame retardant into the copolyester. The mixture is then extruded through a die to produce multiple strands. In certain embodiments, the strands are fed through a water trough to cool the pellets. Upon exiting the water trough, the strands are dried and fed into a dicer to cut the strands into pellets. Alternatively, the mixture can be extruded through a circular flat plate die with multiple openings into water. The flat plate die has a rotating cutter that slices the strands as they extrude from the die to produce pellets. The continuous flow of water cools the pellets and transports them to a drying section, typically a centrifuge to separate the pellets from the water.

Alternatively, the flame retardants can be incorporated into a plastics compounding line such as a two-rotor continuous compounding mixer (such as a Farrell Continuous Mixer) to form a copolyester composition concentrate. In this case copolyester pellets are dried for 4 to 6 hours at 150°F to 190°F (65.6°C to 87.8°C) to reduce moisture. The copolyester pellets and the flame retardant are fed into the throat of the continuous mixer and melted into a homogenous mixture at 430°F to 520°F (221°C to 271°C). The output rate of the mixer is controlled by varying the area of a discharge orifice. The melt can be sliced off into 'loaves' and fed to a two-roll mill or the throat of a single screw extruder. In the case of the melt being fed to a two-roll mill, the melt covers one of the rolls to form a sheet of the concentrate which is cut into strips which are fed to the throat of a single screw extruder. The mixture is then extruded through a die to produce multiple strands. The strands are fed through a water trough to cool the pellets. Upon exiting the water trough, the strands are dried and fed into a dicer to cut the strands into pellets. Alternatively, the mixture can be extruded through a circular flat plate die with multiple openings into water. The flat plate die has a rotating cutter that slices the strands as they extrude from the die to produce pellets. The continuous flow of water cools the pellets and transports them to a drying section, typically a centrifuge to separate the pellets from the water. In the case of the 'loaves' (relatively large portions of the concentrate) being fed to a single screw extruder, the mixture is extruded through a die to produce multiple strands. The strands can be fed through a water trough to cool the pellets. Upon exiting the water trough, the strands are dried and fed into a dicer to cut the strands into pellets. Alternatively, the mixture can be extruded through a circular flat plate die with multiple openings into water. The flat plate die has a rotating cutter that slices the strands as they extrude from the die to produce pellets. The continuous flow of water cools the pellets and transports them to a drying section, typically a centrifuge to separate the pellets from the water.

Alternatively, the flame retardant can be incorporated in a high-intensity mixer such a Banbury^{®} batch type mixer to form a copolyester composition concentrate. In this case, the copolyester pellets can be dried for 4 to 6 hours at 150°F to 190°F (65.6°C to 87.8°C) to reduce moisture. The copolyester pellets and the flame retardants are charged into a high-intensity mixer and a ram lowered to compress the pellet/flame retardants mixture into the mixing chamber. Two rotating mixer blades melt the pellets and disperse the flame retardant into the melt. When the desired temperature is reached, a door is opened in the bottom of the mixer and the mixture is dropped onto a two-roll mill. A ribbon from the two-roll mill can then be fed to a single screw extruder. The mixture is then extruded through a die to produce multiple strands. The strands can be fed through a water trough to cool the pellets. Upon exiting the water trough, the strands are dried and fed into a dicer to cut the strands into pellets. Alternatively, the mixture can be extruded through a circular flat plate die with multiple openings into water. The flat plate die has a rotating cutter that slices the strands as they extrude from the die to produce pellets. The continuous flow of water cools the pellets and transports them to a drying section, typically a centrifuge to separate the pellets from the water.

The present invention includes plastic articles comprising the copolyester compositions. The plastic articles may be made by processes comprising, but not limited to, extrusion of the copolyester composition to produce a continuous flat sheet or profile or injection molding to create discrete articles or calendering to produce a continuous film or sheet or additive manufacturing of a powder or filament to produce a three-dimensional shape.

Films and/or sheets useful in the present invention can be of any thickness which would be apparent to one of ordinary skill in the art. In one embodiment, the films(s) of the invention have a thickness of less than 30 mils or less than 20 mils or less than 10 mils or less than 5 mils. In one embodiment, the sheets of the invention have a thickness of greater than 30 mils. In one embodiment, the sheets of the invention have a thickness of from 30 mils to 100 mils or from 30 mils to 200 mils or from 30 mils to 500 mils.

The invention further relates to the films and/or sheets comprising the polyester compositions of the invention. The methods of forming the polyesters into films and/or sheets are well known in the art. Examples of films and/or sheets of the invention include, but are not limited to, extruded films and/or sheets, calendered films and/or sheets, compression molded films and/or sheets, injection molded films or sheets, and solution casted films and/or sheets. Methods of making film and/or sheet include but are not limited to extrusion, calendering, extrusion molding, compression molding, and solution casting. These films or sheets may be made or subjected to further processing such as orientation (uniaxial or biaxial), heat setting, surface treatment, etc.

In one embodiment of the invention comprises a flat sheet or profile. The sheet or profile is prepared by extruding the copolyester composition to produce a flat sheet or profile. In this case, pellets of the copolyester composition are dried at 150°F to 190°F (65.6°C to 87.8°C) for 4 to 6 hours and are then fed to either a single screw extruder, a twin-screw extruder, or a conical twin screw extruder. The copolyester composition pellets are conveyed and compressed by the screw(s) down the extruder barrel to melt the pellets and discharge the melt from the end of the extruder. The melt is fed through a screening device to remove debris and/or a melt pump to reduce pressure variations caused by the extruder. The melt is then fed through a die to create a continuous flat sheet or into a profile die to create a continuous shape. In one embodiment of the invention comprising a flat sheet die, the melt is extruded onto a series of metal rolls, typically three, to cool the melt and impart a finish onto the sheet. The flat sheet is then conveyed in a continuous sheet for a distance or period of time sufficient to cool the sheet. The sheet is then trimmed to the desired width and then either rolled up into a roll or sheared or sawed into sheet form of desired dimensions. A flat sheet can also be formed into a shaped article through mechanical means to form a desired shaped article and then cooled either by spraying with water, by conveying through a water trough or by blowing air on the shaped article. The article then sawed or sheared to the desired length. In the case of a profile die, the die is designed to produce the desired shape of the profile. After exiting the die, the profile is then cooled either by spraying with water, by conveying through a water trough or by blowing air on the profile. The profile is then sawed or sheared to the desired length. In the case of a fiber, the fiber can be pulled out of the extrusion die spinnerets to the desired fiber diameter and crystallized for physical property enhancement.

Another embodiment of the invention comprises mixing neat copolyester pellets with a concentrate of flame retardant and then extruding the copolyester composition. The flame retardant concentrate can be compounded as a pellet. The pellets are dried at 150°F to 190°F (65.6°C to 87.8°C) for 4 to 6 hours before extrusion. The pellets are dried after being blended in a low-intensity mixer such as a ribbon blender, a tumbler, or conical screw blender. The pellets are then fed to an extruder including, but not limited to, a single screw extruder, a twin-screw extruder, or a conical twin screw extruder. The pellets are conveyed and compressed by the screw(s) down the extruder barrel to melt the pellets and discharge the melt from the end of the extruder. The melt is typically fed through a screening device to remove debris and/or a melt pump to reduce pressure variations caused by the extruder. The melt is then fed through a die to create a continuous flat sheet or into a profile die to create a continuous shape. In the case of the flat sheet die, the melt is extruded onto a series of metal rolls, typically three, to cool the melt and impart a finish onto the sheet. The flat sheet is then conveyed in a continuous sheet for a distance or period of time sufficient to cool the sheet. It can then be trimmed to the desired width and then either rolled up into a roll or sheared or sawed into sheet form. A flat sheet can also be formed into a shape through mechanical means to form a desired shape and then cooled either by spraying with water, through a water trough or by blowing air on the shaped article. It can then be sawed or sheared to the desired length. In the case of a film, the film may be produced and wound into a roll. In the case of a profile die, the die is designed to produce the desired shape of the article. After exiting the die, the profile can then be cooled either by spraying with water, through a water trough or by blowing air on the profile. It can then be sawed or sheared to the desired length. In the case of a fiber, the fiber can be pulled out of the extrusion die spinnerets to the desired fiber diameter and crystallized for physical property enhancement.

Another embodiment of the invention consists of mixing neat copolyester pellets with a flame retardant concentrate and then extruding them with either short or long strand glass fiber reinforcement or extruding them into a continuous glass fiber composite film, sheet or tape. The flame retardant can be compounded as a single pellet. The pellets are dried at 150° F to 190°F (65.6°C to 87.8°C) for 4 to 6 hours before extrusions. The pellets can be dried separately or together after being blended in a low-intensity mixer such as a ribbon blender, a tumbler, or conical screw blender. The pellets are then fed to either a single screw extruder, a twin-screw extruder, or a conical twin screw extruder. The pellets are conveyed and compressed by the screw(s) down the extruder barrel to melt the pellets and discharge the melt from the end of the extruder. The melt can be fed through a screening device to remove debris and/or a melt pump to reduce pressure variations caused by the extruder. The melt can then be fed through a die to create a continuous flat sheet or into a profile die to create a continuous shape. In the case of the flat sheet die, the melt is extruded onto a series of metal rolls, typically three, to cool the melt and impart a finish onto the sheet. The flat sheet is then conveyed in a continuous sheet to cool the sheet. It can then be trimmed to the desired width and then either rolled up into a roll or sheared or sawed into sheet form. A flat sheet can also be formed into a shape through mechanical means to form a desired shape and then cooled either by spraying with water, through a water trough or by blowing air on the profile. It can then be sawed or sheared to the desired length or a film may be produced and wound into a roll. In the case of a profile die, the die is designed to produce the desired shape of the article. After exiting the die, it can then be cooled either by spraying with water, through a water trough or by blowing air on the profile. It can then be sawed or sheared to the desired length. In the case of a fiber, the fiber can be pulled out of the extrusion die spinnerets to the desired fiber diameter and crystallized for physical property enhancement.

Another embodiment of the invention comprises extruding fully compounded pellets of the copolyester composition, comprising the copolyester and flame retardants, to produce an injection molded article. In this case, the pellets are dried at 150° F to 190°F (65.6°C to 87.8°C) for 4 to 6 hours to dry the pellets which are then fed to a reciprocating single screw extruder. The pellets are melted by the screw rotation and reciprocating action. Once the pellets reach the desired temperature, a gate is opened at the end of the extruder and the melted plastic is pumped by the screw into a heated mold to form an article of the desired shape. Once the mold is filled, a coolant is pumped through the mold to cool it and the melted plastic. Once the plastic has solidified, the mold is opened and the article is removed from the mold.

Another embodiment of the invention comprises mixing neat copolyester pellets with a concentrate of the flame retardant to form the copolyester composition and then extruding the copolyester composition to produce an injection molded article with or without short or long strand glass fiber reinforcement. The pellets are dried at 150°F to 190°F (65.6°C to 87.8°C) for 4 to 6 hours and are then fed to a reciprocating single screw extruder. The pellets can be dried separately or together after being blended in a low-intensity mixer including, but not limited to, a ribbon blender, a tumbler, or conical screw blender. Once the pellets reach the desired temperature, a gate is opened at the end of the extruder and the melted plastic is pumped by the screw into a heated mold to form an article of the desired shape. Once the mold is filled, a coolant is pumped through the mold to cool it and the melted plastic. Once the plastic has solidified, the mold is opened and the article is removed from the mold.

Another embodiment of the invention comprises mixing neat copolyester pellets with a concentrate of flame retardants to form the copolyester composition and then calendering the copolyester composition to produce a film product. Calendering is a well-known process of forming a film or sheet through successive co-rotating parallel rollers. In the calendering process, the pellets do not need to be pre-dried as the processing temperatures are low enough (350°F to 400°F; 177°C to 204°C) so degradation and hydrolysis of the polyester does not occur in a significant amount. The copolyester and flame retardant composition may be melted by using a high intensity mixer or extruder, including but not limited to, Buss Ko-kneader, a planetary gear extruder, Farrell continuous mixer, a twin screw extruder, or a Banbury^{®} type mixer. The melt is then conveyed to the calender. A calender typically consists essentially of a system of three or more large diameter heated rollers which convert high viscosity plastic into a film or sheet. The flat sheet or film is conveyed in a continuous web to cool the sheet. It can then be trimmed to the desired width and then either rolled up into a roll or sheared or sawed into sheet form.

Although the copolyester composition may be prepared by mixing or blending a concentrate of flame retardants and copolyester, the copolyester composition may alternatively be prepared by blending the flame retardants directly with the copolyester, using any of the mixing or blending processed previously described for making the copolyester composition by blending the flame retardant concentrate and the copolyester. The two flame retardants may be mixed or blended with the copolyester simultaneously or sequentially.

In embodiments, articles comprising any of the copolyester compositions (described herein) can articles or components of articles configured for use or otherwise useful in any application where flame retardant properties are beneficial, for example in one or more of the following applications: medical device housings or components, housings for electronic devices or peripherals, personal electronic device components, television or monitor housings or components, power tool housings or components, power adapter housings or components, home automation device components, gaming device housings or components, building and construction materials and components, furnishing and home decoration components, wiring and connector housings or components, and automotive structural or decorative components.

This invention can be further illustrated by the following examples of certain embodiments thereof, although it will be understood that these examples are included merely for purposes of illustration and are not intended to limit the scope of the invention unless otherwise specifically indicated.

### EXAMPLES

The following abbreviations are used: kN is kiloNewtons; J is Joules; % NB is percent no break; J/m is Joules per meter; LOI is Loss On Ignition; weight % is weight percent; TGA is thermographic analysis; TPA is terephthalic acid; TMCD is 2,2,4,4-tetramethylcyclobutane-1,3-diol and 1,4-CHDM is 1,4-cyclohexanedimethanol. PCTM is a glycol modified polyethylene cyclohexane dimethanol terephthalate.

### Materials Used in Testing:

| **Material** | **Type** | **Grade Name** | **Melt Temperature (°C)** |
|---|---|---|---|
| Copolyester A | Resin | Eastman Tritan TX1000 | na |
| FR Additive A | Brominated FR | St. Louis Group BroShield 21-B | 345°C |
| FR Additive B | Brominated FR | St. Louis Group BroShield 67-B | 445°C |
| FR Additive C | Brominated FR | St. Louis Group BroShield 58-B | 220-240°C |
| FR Additive D | Brominated FR | Lanxess BC-58 | 200-230°C |
| FR Additive E | Brominated FR | St. Louis Group BroShield 245 | 220-240°C |
| FR Synergist A | Antimony Synergist | St. Louis Group FireGard ATO | >600°C |
| FR Synergist B | Antimony Synergist | St. Louis Group FireGard SA | >375°C |
| Processing Aid A | Siloxane | Dow Corning 4-7081 | -- |
| Processing Aid B | PTFE | Teflon PTFE 60 X | -- |
| Impact Modifier A | Reactive Acrylic | Lotader AX8900 | -- |
| Impact Modifier B | Unreactive MBS | Kane Ace B564 | -- |
| Chain Extender A | Reactive Acrylic | Joncryl 4468 | -- |

Copolyester compositions were prepared by compounding a combination of materials via a typical twin-screw extrusion process. Materials were either metered individually into the extruder or mixed together in a bag via physical agitation prior to feeding through a single feeder. Appropriate feed rates are selected for the twin-screw extruder. Typical barrel temperatures for the examples provided were 270-280°C. Screw RPM ranges were from 150-350. Melt temperatures ranged from 270-300°C. Vacuum or vent ports were optional. Extruded strands were pelletized via a water bath/cutter or underwater pelletizer system, achieving an appropriate pellet size/shape for further processing.

The copolyester compositions were molded into parts for testing via a typical injection molding process. Barrel temperatures ranged from 260-280°C with water-cooled mold temperatures ranging from 20-80°C. Test bars were molded at thicknesses of 1.6mm (for UL 94 testing) and 3.2mm (for heat deflection temperature testing). Shorter bars were molded for notched Izod testing.

### Examples 1-5

Examples 1 to 5 were prepared and molded into test parts (or plaques) as described above. The HDT, UL 94 Vertical Burn and Notched Izod were measured for each example. The compositions and test results are listed below in Table 2.

**Table 2 - Examples 1 - 5 Compositions/Results**

| **Component** | **Weight %** | | | | |
|---|---|---|---|---|---|
| | **Ex. 1** | **Ex. 2** | **Ex. 3** | **Ex. 4** | **Ex. 5** |
| Copolyester A | 77.1 | 75.3 | 77.1 | 72.5 | 71 |
| FR Additive C | 17.2 | 17.2 | | 17.2 | 17.2 |
| FR Additive D | | | 17.2 | | |
| Synergist A | 5.4 | 7.2 | 5.4 | 7.2 | 7.2 |
| Processing Aid A | | | | 2.5 | |
| Impact Modifier A | | | | | 4 |
| Processing Aid B | | | | 0.3 | 0.3 |
| Chain Extender A | 0.3 | 0.3 | 0.3 | 0.3 | 0.3 |

| **Test/Results** | | | | | |
|---|---|---|---|---|---|
| UL 94 Vertical Burn (1.6mm) | V-0 | V-0 | V-0 | V-0 | V-0 |
| HDT (°C, 1.8 MPa) | 91 | 89 | 92 | 89 | 90 |
| Notched Izod (J/m) | 112 | 116 | 125 | 143 | 310 |

### Comparative Examples 1-4

Comparative Examples 1 to 4 were prepared and molded into test parts (or plaques) as described above. The HDT, UL 94 Vertical Burn and Notched Izod were measured for each example. The compositions and test results are listed below in Table 3.

**Table 3 - Comparative Examples 1 - 4 Compositions/Results**

| **Component** | **Weight %** | | | |
|---|---|---|---|---|
| | **Comp. Ex. 1** | **Comp. Ex. 2** | **Comp. Ex. 3** | **Comp. Ex. 4** |
| Copolyester A | 80.7 | 78.2 | 77.7 | 77.9 |
| FR Additive A | 12.5 | | 12.5 | 12.5 |
| FR Additive B | | 15.1 | | |
| Synergist B | 6.8 | 6.8 | 6.8 | 6.8 |
| Processing Aid A | | | | 2.5 |
| Impact Modifier B | | | 3.0 | |
| Processing Aid B | | | | 0.3 |

| **Test/Results** | | | | |
|---|---|---|---|---|
| UL 94 Vertical Burn (1.6mm) | V-0 | V-0 | V-0 | V-0 |
| HDT (°C, 1.8 MPa) | 78 | 81 | 78 | 76 |
| Notched Izod (J/m) | 80 | 101 | 122 | 117 |

### Comparative Examples 5-10

Comparative Examples 5 to 10 were prepared and molded into test parts (or plaques) as described above. The HDT, UL 94 Vertical Burn and Notched Izod were measured for each example. The compositions and test results are listed below in Table 4.

**Table 4 - Comparative Examples 5 - 10 Compositions/Results**

| **Component** | **Weight %** | | | | | |
|---|---|---|---|---|---|---|
| | **Comp. Ex. 5** | **Comp. Ex. 6** | **Comp. Ex. 7** | **Comp. Ex. 8** | **Comp. Ex. 9** | **Comp. Ex. 10** |
| Copolyester A | 85.6 | 90.4 | 90.1 | 70.4 | 70.4 | 81.6 |
| FR Additive A | 9.4 | 6.3 | 6.3 | 12.5 | 12.5 | |
| FR Additive B | | | | | | 13.8 |
| FR Synergist A | | | | | | 4.3 |
| FR Synergist B | 5.1 | 3.4 | 3.4 | 6.8 | 6.8 | |
| Impact Modifier A | | | | 10.0 | | |
| Impact Modifier B | | | | | 10.0 | |
| Processing Aid B | | | 0.3 | 0.3 | 0.3 | |
| Chain Extender A | | | | | | 0.3 |

| **Test/Results** | | | | | | |
|---|---|---|---|---|---|---|
| UL 94 Vertical Burn (1.6mm) | V-2 | V-2 | V-2 | Fail | V-1 | V-2 |
| HDT (°C, 1.8 MPa) | 80 | 81 | 79 | 72 | 77 | 90 |
| Notched Izod (J/m) | 98 | 1072 | 965 | 867 | 112 | 185 |

A review of Tables 2 through 5 reveals that tougher compositions having UL94 of V-0 were provided based on the use of meltable (i.e., Tm below 270C) brominated flame-retardant additives. Examples 1 and 2 (without any impact modifier) were tougher (i.e., had higher notched izod impact) than comparative examples 1 and 2 (made from non-meltable brominated additives with no impact modifier). Also, when impact modifier was included in the formulations, those formulations based on meltable bromated additives (Examples 4 and 5) had a higher notched Izod than those based on non-melting brominated additives with impact modifiers (Comparative Examples 3 and 4).

A review of the results also shows that a reduced loading of bromine FR additive and antimony synergist in Comparative Examples 5 and 6, resulted in a loss in V-0 rating before achieving an increase in notched Izod above 100 J/m level (without impact modifier). At higher loadings of impact modifier (≥10%), the V-0 rating was also lost (as shown in Comparative Examples 8 and 9), showing that simply increasing impact modifier loading (e.g., above 10% loading) is not a viable option for reaching a tougher copolyester composition and also having a UL94 rating of V-0.

## Claims

1. A copolyester composition comprising:
(a) from about 50 to about 95 weight % of a copolyester, the copolyester comprising:
(i) a diacid component comprising
from 70 to 100 mole % residues of terephthalic acid,
from 0 to 30 mole % residues of a modifying aromatic diacid having from 8 to 12 carbon atoms, and
from 0 to 10 mole % residues of an aliphatic dicarboxylic acid; and
(ii) a glycol component comprising
from 45 to 95 mole % cyclohexanedimethanol (CHDM) residues,
from 5 to 65 mole % 2,2,4,4-tetramethylcyclobutane-1,3-diol (TMCD) residues, and
from 0 to 10 mole% of a modifying glycol having 2 to 20 carbon atoms;
wherein the inherent viscosity of the copolyester is from 0.5 to 1.2 dL/g as determined in 60/40 (wt/wt) phenol/tetrachloroethane at a concentration of 0.5 g/100 ml at 25° C, and
wherein the weight % is based on the weight of the copolyester, wherein the total mole % of the dicarboxylic acid component is 100 mole % and the total mole % of the glycol component is 100 mole %; and
(b) from about 5 to about 30 weight % of a flame retardant additive comprising a halogen-containing compound,
wherein the flame retardant additive has a melting temperature (Tm) or a glass transition temperature (Tg) of 270°C or less, measured as indicated in the specification;
wherein the copolyester composition has a UL 94 V-0 rating or better; and
wherein the copolyester composition has a notched Izod impact strength of 125 Joules/m or greater measured according to ASTM D256.

2. The copolyester composition according to claim 1, wherein the copolyester composition further comprises: (c) from about 1 to about 10 wt% of a flame retardant synergist additive.

3. The copolyester composition according to claim 1 or 2, wherein the glycol component comprises:
from 70 to 95 mole % cyclohexanedimethanol residues and
from 5 to 30, or 10 to 30, or 15 to 30, or 20 to 30, or 15 to 25 mole % of 2,2,4,4-tetramethylcyclobutane-1,3-diol residues; or
wherein the glycol component comprises:
from 60 to 75 mole % cyclohexanedimethanol residues and
from 25 to 40, or 30 to 40 mole % of 2,2,4,4-tetramethylcyclobutane-1,3-diol residues.

4. The copolyester composition according to any one of claims 1 to 3, wherein the inherent viscosity of the copolyester is from 0.55 to 0.85, or 0.55 to 0.65, or 0.65 to 0.80, or 0.65 to 0.75 dL/g.

5. The copolyester composition according to any one of claims 1 to 4, wherein the flame retardant additive is present in an amount from 6 to 26 wt%, or 10 to 25 wt%, or 11 to 21 wt% of the copolyester composition.

6. The copolyester composition according to any one of claims 1 to 5, wherein the flame retardant additive comprises a bromine containing compound, and wherein the flame retardant additive has a bromine content from 5 to 15 wt%.

7. The copolyester composition according to claim 6, wherein the bromine containing compound is an aromatic compound, and/or
is chosen from an oligomer or polymer of tetrabromobisphenol A; a brominated epoxy oligomer; a bromophenoxy triazine; or combinations thereof.

8. The copolyester composition according to any one of claims 1 to 7, wherein the flame retardant additive has a Tm or Tg of 250°C or less.

9. The copolyester composition according to claim 2, wherein the flame retardant synergist additive comprises antimony; or wherein the flame retardant synergist additive comprises an antimony compound chosen from antimony trioxide, sodium antimonate, antimony pentoxide, or combinations thereof.

10. The copolyester composition according to any one of claims 1 to 9, wherein the copolyester composition further comprises a drip suppressant or an impact modifier or mixtures thereof; and/or wherein the copolyester composition comprises an impact modifier chosen from a reactive acrylic impact modifier, an unreactive MBS impact modifier, an epoxide-functional impact modifier, or mixtures thereof.

11. The copolyester composition according to any one of claims 1 to 10, wherein the copolyester composition further comprises a chain extender; or a chain extender that comprises a multifunctional epoxide chain extender.

12. The copolyester composition according to any one of claims 1 to 11, wherein the copolyester composition has a notched Izod impact strength of 150, or 200, or 250, or 300, or 500 Joules/m or greater measured according to ASTM D256; and/or wherein the copolyester composition exhibits 100% ductile behavior when tested according to ASTM D256.

13. The copolyester composition according to any one of claims 1 to 12, wherein the copolyester composition further comprises one or more additional additives chosen from colorants, dyes, mold release agents, additional flame retardants, plasticizers, processing aids, rheology modifiers, nucleating agents, antioxidants, light stabilizers, fillers, and reinforcing materials.

14. An article comprising a copolyester composition according to any one of claims 1 to 13.

15. The article according to claim 14, wherein the article is in the form of a film, sheet, molded part, or profile; or wherein the article is chosen from a medical device housings or components, housings for electronic devices or peripherals, personal electronic device components, television or monitor housings or components, power tool housings or components, power adapter housings or components, home automation device components, gaming device housings or components, building and construction materials and components, furnishing and home decoration components, wiring and connector housings or components, and automotive structural or decorative components.

## Patentansprüche

1. Copolyester-Zusammensetzung, aufweisend:
(a) von etwa 50 bis etwa 95 Gew.-% eines Copolyesters, wobei der Copolyester aufweist:
(i) eine Disäurekomponente, aufweisend
von 70 bis 100 Mol-% Terephthalsäure-Reste,
von 0 bis 30 Mol-% Reste einer modifizierenden aromatischen Disäure mit 8 bis 12 Kohlenstoffatomen, und
0 bis 10 Mol-% Reste einer aliphatischen Dicarbonsäure; und
(ii) eine Glykolkomponente, aufweisend
von 45 bis 95 Mol-% Cyclohexandimethanol (CHDM)-Reste,
5 bis 65 Mol-% 2,2,4,4-Tetramethylcyclobutan-1,3-diol (TMCD)-Reste, und
von 0 bis 10 Mol-% eines modifizierenden Glykols mit 2 bis 20 Kohlenstoffatomen;
wobei die inhärente Viskosität des Copolyesters 0,5 bis 1,2 dL/g beträgt, bestimmt in 60/40 (Gew./Gew.) Phenol/Tetrachlorethan bei einer Konzentration von 0,5 g/100 ml bei 25° C, und
wobei die Gewichtsprozente auf das Gewicht des Copolyesters bezogen sind, wobei die Gesamtmolprozente der Dicarbonsäurekomponente 100 Mol-% und die Gesamtmolprozente der Glykolkomponente 100 Mol-% betragen; und
(b) von etwa 5 bis etwa 30 Gew.-% eines flammhemmenden Additivs, das eine halogenhaltige Verbindung aufweist,
wobei das flammhemmende Additiv eine Schmelztemperatur (Tm) oder eine Glasübergangstemperatur (Tg) von 270°C oder weniger aufweist;
wobei die Copolyester-Zusammensetzung eine UL94 V-O-Einstufung oder besser aufweist; und
wobei die Copolyester-Zusammensetzung eine Kerbschlagzähigkeit nach Izod von 125 Joule/m oder mehr, gemessen nach ASTM D256, aufweist.

2. Copolyester-Zusammensetzung nach Anspruch 1, wobei die Copolyester-Zusammensetzung ferner aufweist: (c) von etwa 1 bis etwa 10 Gew.-% eines flammhemmenden Synergisten-Additivs.

3. Copolyesterzusammensetzung nach Anspruch 1 oder 2, wobei die Glykolkomponente aufweist:
von 70 bis 95 Mol-% Cyclohexandimethanol-Reste und
von 5 bis 30, oder 10 bis 30, oder 15 bis 30, oder 20 bis 30, oder 15 bis 25 Mol-% 2,2,4,4-Tetramethylcyclobutan-1,3-diol-Reste; oder
wobei die Glykolkomponente aufweist:
von 60 bis 75 Mol-% Cyclohexandimethanol-Rest und
von 25 bis 40, oder 30 bis 40 Mol-% 2,2,4,4-Tetramethylcyclobutan-1,3-diolReste.

4. Copolyesterzusammensetzung nach einem der Ansprüche 1 bis 3, wobei die inhärente Viskosität des Copolyesters 0,55 bis 0,85, oder 0,55 bis 0,65, oder 0,65 bis 0,80, oder 0,65 bis 0,75 dL/g beträgt.

5. Copolyesterzusammensetzung nach einem der Ansprüche 1 bis 4, wobei das flammhemmende Additiv in einer Menge von 6 bis 26 Gew.-%, oder 10 bis 25 Gew.-%, oder 11 bis 21 Gew.-% der Copolyesterzusammensetzung vorliegt.

6. Copolyesterzusammensetzung nach einem der Ansprüche 1 bis 5, wobei das flammhemmende Additiv eine bromhaltige Verbindung aufweist, und wobei das flammhemmende Additiv einen Bromgehalt von 5 bis 15 Gew.-% aufweist.

7. Copolyester-Zusammensetzung nach Anspruch 6, wobei die bromhaltige Verbindung eine aromatische Verbindung ist, und/oder
ausgewählt ist aus einem Oligomer oder Polymer von Tetrabrombisphenol A; einem bromierten Epoxyoligomer; einem Bromphenoxytriazin; oder Kombinationen davon.

8. Copolyesterzusammensetzung nach einem der Ansprüche 1 bis 7, wobei das flammhemmende Additiv eine Tm oder Tg von 250°C oder weniger aufweist.

9. Copolyesterzusammensetzung nach Anspruch 2, wobei das flammhemmende Synergisten-Additiv Antimon aufweist; oder wobei das flammhemmende Synergisten-Additiv eine Antimonverbindung aufweist, ausgewählt aus Antimontrioxid, Natriumantimonat, Antimonpentoxid oder Kombinationen davon.

10. Copolyesterzusammensetzung nach einem der Ansprüche 1 bis 9, wobei die Copolyesterzusammensetzung ferner ein Tropfunterdrückungsmittel oder ein Schlagzähigkeitsmodifizierungsmittel oder Mischungen davon aufweist; und/oder wobei die Copolyesterzusammensetzung ein Schlagzähigkeitsmodifizierungsmittel aufweist, das aus einem reaktiven Acrylschlagzähigkeitsmodifizierungsmittel, einem nicht reaktiven MBS-Schlagzähigkeitsmodifizierungsmittel, einem epoxidfunktionellen Schlagzähigkeitsmodifizierungsmittel oder Mischungen davon ausgewählt ist.

11. Copolyester-Zusammensetzung nach einem der Ansprüche 1 bis 10, wobei die Copolyester-Zusammensetzung ferner einen Kettenverlängerer aufweist; oder einen Kettenverlängerer, der einen multifunktionellen Epoxid-Kettenverlängerer aufweist.

12. Copolyester-Zusammensetzung nach einem der Ansprüche 1 bis 11, wobei die Copolyester-Zusammensetzung eine Kerbschlagzähigkeit nach Izod von 150 oder 200 oder 250 oder 300 oder 500 Joule/m oder mehr, gemessen nach ASTM D256, aufweist; und/oder wobei die Copolyester-Zusammensetzung ein 100%iges duktiles Verhalten zeigt, wenn sie nach ASTM D256 getestet wird.

13. Copolyester-Zusammensetzung nach einem der Ansprüche 1 bis 12, wobei die Copolyester-Zusammensetzung ferner ein oder mehrere zusätzliche Additive aufweist, die aus Färbemitteln, Farbstoffen, Formtrennmitteln, zusätzlichen Flammschutzmitteln, Weichmachern, Verarbeitungshilfsmitteln, Rheologiemodifikatoren, Nukleierungsmitteln, Antioxidantien, Lichtstabilisatoren, Füllstoffen und Verstärkungsmaterialien ausgewählt sind.

14. Gegenstand, aufweisend eine Copolyesterzusammensetzung nach einem der Ansprüche 1 bis 13.

15. Gegenstand nach Anspruch 14, wobei der Gegenstand in Form einer Folie, eines Blattes, eines Formteils oder eines Profils vorliegt; oder wobei der Gegenstand ausgewählt ist aus Gehäusen oder Komponenten für medizinische Geräte, Gehäusen für elektronische Geräte oder Peripheriegeräte, Komponenten für persönliche elektronische Geräte, Gehäusen oder Komponenten für Fernseher oder Monitore, Gehäusen oder Komponenten für Elektrowerkzeuge, Gehäusen oder Komponenten für Netzadapter, Gehäusen oder Komponenten für Hausautomatisierungsgeräte, Gehäusen oder Komponenten für Spielgeräte, Bau- und Konstruktionsmaterialien und - komponenten, Einrichtungs- und Heimdekorationskomponenten, Gehäusen oder Komponenten für Kabel und Steckverbinder, sowie Struktur- oder Dekorationskomponenten für Kraftfahrzeuge.

## Revendications

1. Composition de copolyester comprenant :
(a) d'environ 50 à environ 95 % en poids d'un copolyester, le copolyester comprenant :
(i) un composant diacide comprenant
de 70 à 100 % en mole de résidus d'acide téréphtalique,
de 0 à 30 % en mole de résidus d'un diacide aromatique modificateur ayant de 8 à 12 atomes de carbone, et
de 0 à 10 % en mole de résidus d'un acide dicarboxylique aliphatique ; et
(ii) un composant glycol comprenant
de 45 à 95 % en mole de résidus de cyclohexanediméthanol (CHDM),
de 5 à 65 % en mole de résidus de 2,2,4,4-tétraméthylcyclobutane-1,3-diol (TMCD), et
de 0 à 10 % en mole d'un glycol modificateur ayant de 2 à 20 atomes de carbone ;
dans laquelle la viscosité inhérente du copolyester est comprise entre 0,5 et 1,2 dL/g telle que déterminée dans un mélange 60/40 (poids/poids) de phénol/tétrachloroéthane à une concentration de 0,5 g/100 mL à 25 °C, et
dans laquelle le % en poids est basé sur le poids du copolyester, dans laquelle le % en mole total du composant acide dicarboxylique est de 100 % en mole et le % en mole total du composant glycol est de 100 % en mole ; et
(b) d'environ 5 à environ 30 % en poids d'un additif ignifuge comprenant un composé contenant un halogène,
dans laquelle l'additif ignifuge a une température de fusion (Tm) ou une température de transition vitreuse (Tg) de 270 °C ou moins, mesurée comme indiqué dans la description ;
dans laquelle la composition de copolyester a un indice V-0 au test UL-94 ou un meilleur indice ; et
dans laquelle la composition de copolyester a une résistance au choc izod sur éprouvette entaillée de 125 joules/m ou plus mesurée selon la norme ASTM D256.

2. Composition de copolyester selon la revendication 1, dans laquelle la composition de copolyester comprend en outre : (c) d'environ 1 à environ 10 % en poids d'un additif synergique ignifuge.

3. Composition de copolyester selon la revendication 1 ou 2, dans laquelle le composant glycol comprend :
de 70 à 95 % en mole de résidus de cyclohexanediméthanol et
de 5 à 30, ou de 10 à 30, ou de 15 à 30, ou de 20 à 30, ou de 15 à 25 % en mole
de résidus de 2,2,4,4-tétraméthylcyclobutane-1,3-diol ; ou
dans laquelle le composant glycol comprend :
de 60 à 75 % en mole de résidus de cyclohexanediméthanol et
de 25 à 40 ou de 30 à 40 % en mole de résidus de 2,2,4,4-tétraméthylcyclobutane-1,3-diol.

4. Composition de copolyester selon l'une quelconque des revendications 1 à 3, dans laquelle la viscosité inhérente du copolyester est comprise entre 0,55 et 0,85, ou entre 0,55 et 0,65, ou entre 0,65 et 0,80, ou entre 0,65 et 0,75 dL/g.

5. Composition de copolyester selon l'une quelconque des revendications 1 à 4, dans laquelle l'additif ignifuge est présent en une quantité comprise entre 6 et 26 % en poids, ou entre 10 et 25 % en poids, ou entre 11 et 21 % en poids de la composition de copolyester.

6. Composition de copolyester selon l'une quelconque des revendications 1 à 5, dans laquelle l'additif ignifuge comprend un composé contenant du brome et dans laquelle l'additif ignifuge a une teneur en brome comprise entre 5 et 15 % en poids.

7. Composition de copolyester selon la revendication 6, dans laquelle le composé contenant du brome est un composé aromatique, et/ou
est choisi parmi un oligomère ou un polymère de tétrabromobisphénol A ; un oligomère époxy bromé ; une bromophénoxy triazine ; ou des combinaisons de ceux-ci.

8. Composition de copolyester selon l'une quelconque des revendications 1 à 7, dans laquelle l'additif ignifuge a une température de fusion Tm ou une température de transition vitreuse Tg de 250 °C ou moins.

9. Composition de copolyester selon la revendication 2, dans laquelle l'additif synergique ignifuge comprend de l'antimoine ; ou dans laquelle l'additif synergique ignifuge comprend un composé d'antimoine choisi parmi le trioxyde d'antimoine, l'antimoniate de sodium, le pentoxyde d'antimoine, ou des combinaisons de ceux-ci.

10. Composition de copolyester selon l'une quelconque des revendications 1 à 9, dans laquelle la composition de copolyester comprend en outre un agent anti-goutte ou un modificateur de résistance au choc ou des mélanges de ceux-ci ; et/ou dans laquelle la composition de copolyester comprend un modificateur de résistance au choc choisi parmi un modificateur de résistance au choc de type acrylique réactif, un modificateur de résistance au choc de type MBS non réactif, un modificateur de résistance au choc à fonction époxyde, ou des mélanges de ceux-ci.

11. Composition de copolyester selon l'une quelconque des revendications 1 à 10, dans laquelle la composition de copolyester comprend en outre un agent d'allongement de chaîne ; ou un agent d'allongement de chaîne qui comprend un agent d'allongement de chaîne de type époxyde multifonctionnel.

12. Composition de copolyester selon l'une quelconque des revendications 1 à 11, dans laquelle la composition de copolyester a une résistance au choc izod sur éprouvette entaillée de 150, ou 200, ou 250, ou 300, ou 500 joules/m ou plus, mesurée selon la norme ASTM D256 ; et/ou dans laquelle la composition de copolyester présente un comportement ductile de 100 % lors de l'essai selon la norme ASTM D256.

13. Composition de copolyester selon l'une quelconque des revendications 1 à 12, dans laquelle la composition de copolyester comprend en outre un ou plusieurs additifs supplémentaires choisis parmi des colorants, des marqueurs, des agents de démoulage, des agents ignifuges supplémentaires, des plastifiants, des auxiliaires de traitement, des modificateurs de rhéologie, des agents de nucléation, des antioxydants, des photostabilisants, des charges et des matériaux de renforcement.

14. Article comprenant une composition de copolyester selon l'une quelconque des revendications 1 à 13.

15. Article selon la revendication 14, dans lequel l'article est sous la forme d'un film, d'une feuille, d'une pièce moulée ou d'un profilé ; ou dans lequel l'article est choisi parmi des boîtiers ou des composants de dispositifs médicaux, des boîtiers de dispositifs ou périphériques électroniques, des composants de dispositifs électroniques personnels, des boîtiers ou des composants de téléviseurs ou d'écrans, des boîtiers ou des composants d'outils électriques, des boîtiers ou composants d'adaptateurs électriques, des composants de dispositifs domotiques, des boîtiers ou composants de dispositifs de jeu, des matériaux et composants de construction, des composants d'ameublement et de décoration intérieure, des boîtiers ou composants de câblage et de connexion, et des composants structurels ou décoratifs pour l'automobile.
